Europäisches Patentamt

(19) European Patent Office

Office européen des brevets

(11) Publication number: **0 237 847**
**B1**

(12) **EUROPEAN PATENT SPECIFICATION**

(45) Date of publication of the patent specification:
**10.10.90**

(51) Int. Cl.⁵: **B23Q 1/02**

(21) Application number: **87102724.9**

(22) Date of filing: **26.02.87**

(54) Guiding and supporting system for spindle heads of machine tools.

(30) Priority: **20.03.86 IT 2129486 U**

(43) Date of publication of application:
**23.09.87 Bulletin 87/39**

(45) Publication of the grant of the patent:
**10.10.90 Bulletin 90/41**

(84) Designated Contracting States:
**CH DE ES FR GB LI**

(56) References cited:
**DE-A- 1 627 206**
**FR-A- 2 130 943**
**US-A- 4 062 123**

(73) Proprietor: **MAUT S.p.A., Via Passerina, 38,**
**I-27058 Voghera(IT)**

(72) Inventor: **Natino, Alberto, Via Carlo Mirabello 31/A,**
**I-15057 Tortona (Alessandria)(IT)**

(74) Representative: **Frank, Gerhard, Dipl.-Phys.,**
**Patentanwälte Dr. F. Mayer & G. Frank Westliche 24,**
**D-7530 Pforzheim(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention generally relates to machine tools and, more particularly, an improved carriage for spindle heads associated to machine tools, for example milling and boring machines.

At present the nowaday machine tools, as for example the milling and boring machines, make use of a spindle head provided with a speed change gear and a d.c.motor which operates the spindle, through the speed change gear, to the different speeds required by the working operation. The unit comprising the spindle head, the speed change gear and the motor is capable of horizontally moving on the upright in opposite guideways within a carriage which is slidably secured to the upright in order to permit the vertical movement along the upright of the above mentioned unit. For the horizontal movement, the spindle head is provided with at least a pair of guideways generally formed of longitudinal grooves provided on the side surfaces of the head, adjacent two edges thereof, these guideways being capable of cooperating with corresponding gibs secured to the spindle head supporting carriage.

By means of this horizontal guiding system wherein the head guideways are arranged on the side thereof and cooperate with the gibs secured to the head supporting carriage, a good support of the spindle head is obtained, but the stresses exerted by the working tool and the reaction forces generated are principally directed on a limited surface of the guideways, so that, in the spindle head, light working inaccuracies can be generated.

FR-A 2 130 943 discloses a supporting and guiding system for tables of wood-working machines comprising a parallelepipedal slider and a frame therefor which is formed of four metal plates. The four plates are arranged so as to form a square in cross-section and are provided with guiding surfaces for the slider. The four metal plates are adjustable connected to each other. This supporting and guiding system is very heavy and does not lend itself very well to be applied on a machine tool for guiding a spindle head thereof.

The present invention aims at obviating the above disadvantages by providing a new carriage for a spindle head of a machine tool, which is simple in construction while offering better performances during the working.

More particularly, the carriage for a spindle head of a machine tool being formed so as to encompass the spindle head for supporting and guiding the spindle head is characterized in that it comprises two squae frames secured to the ends of the vertically movable carriage of the spindle head and each of which is formed of four metal bars adjestably connected to each other, said frames acting as a sliding surface of the spindle head, increasing the support surface of the spindle head on said carriage and guiding the spindle head in its horizontal movement.

The present invention will be now further described in connection with the accompanying drawings, wherein:

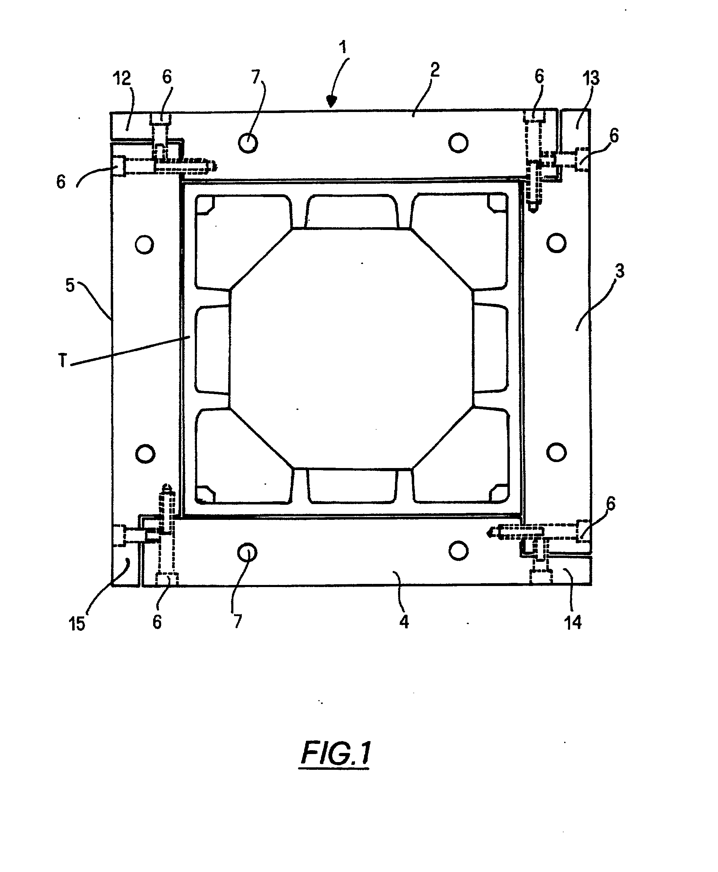

Fig. 1 is a front view of the support system of the spindle head; and

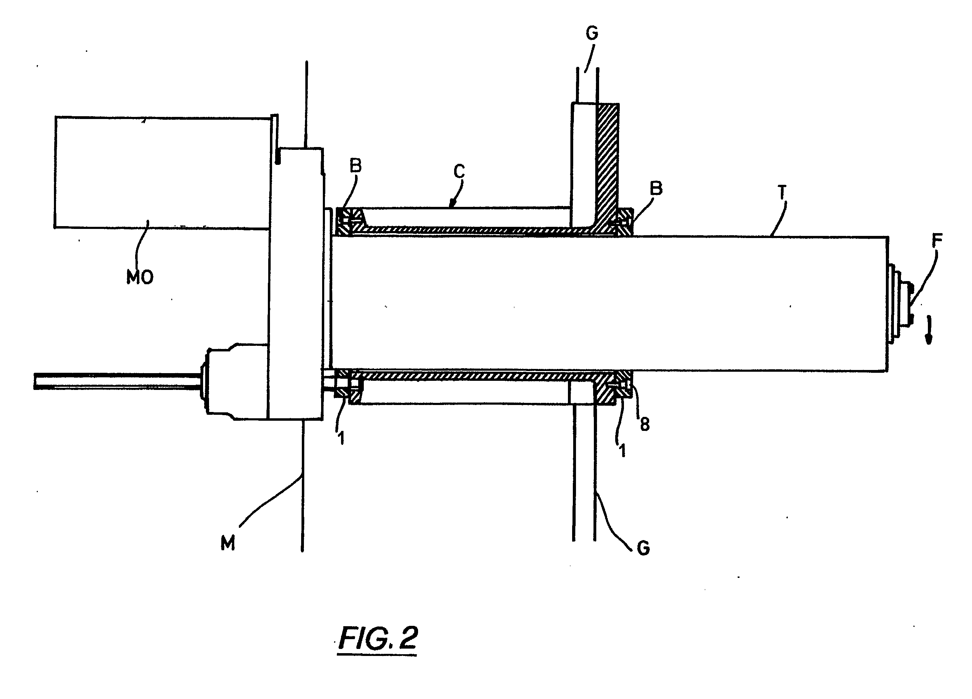

Fig. 2 is a side elevation view, partially sectioned, of the above system.

As can be seen from the drawings, the spindle head generally indicated with T is represented here as a part of a milling and boring machine of the type having a horizontally movable upright M to which the spindle head is applied. The spindle head T is capable of carrying out a horizontal movement with respect to the upright M within the carriage C which moves vertically up and down along the upright M, these movements being guided by guideways G. The spindle head T can be provided with a speed change gear, not shown, and a d.c.motor MO which operates the spindle F, through the speed change gear, at the different speeds required by the working operation.

The unit comprising the spindle head, the speed change gear and the motor is capable of moving in a horizontal direction with respect to the upright M, guided within the support carriage C which is vertically movable, as already said, along the upright in order to permet the vertical movement of this unit.

For guiding the spindle head, the carriage is provided with the support and guide system according to the present invention, which is comprised substantially of a pair of square frames, arranged at the ends of the carriage C and secured in position by screws. Each square frame, generally indicated with the numeral 1, is formed of four metal bars 2,3,4 and 5, secured to each other by means of screws 6.

More particularly, each of the metal bars 2,3,4,5 is shaped so as to have a stepped end 12,13,14 and 15, respectively, which is intended to receive the end without step of an adjacent metal bar. In this manner the bars are secured to each other with a geometric fit and are maintained in the desired position by the screws 6 which offer also the possibility of an accurate adjustment of the bar position with respect to the carriage C in which the spindle head T slides.

Therefore, it can be seen that both the frames 1 provided at the ends of the carriage C and encompassing the spindle head provide a support and guide means for the spindle head along all the four surfaces thereof, both in the front position and in the rear position of the carriage so that there is a complete support of the spindle head at the ends of the carriage C which eliminates the need of providing guideways in the spindle head T and the use of gibs intended to cooperate therewith. As a result, the spindle head can carry out more accurately the working operations because the stresses to which the head is subjected are completely absorbed by the supporting and guiding frames 1. Numeral 7 indicates holes provided in the metal bars for their application by means of screws 8 to the carriage C.

From the foregoing,it is readily apparent that the supporting and guiding system of the spindle head according to the present invention offers two very important advantages with respect to the conventional systems, namely the omission of the guideways in the spindle head body which require an accurate machining operation and therefore are very expensive, and the increase of the support surface of the spindle head in the frames for a more uniform distribution of the stresses that the head applies to the supporting and guiding system in accordance to the present invention.

## Claims

1. Carriage for a spindle head of a machine tool being formed so as to encompass the spindle head for supporting and guiding the spindle head, characterized in that it comprises:
   - two square frames secured to the ends of the vertically movable carriage of the spindle head;
   - each square frame being formed of four metal bars adjustably connected to each other;
   - said frames acting as a sliding surface of the spindle head, increasing the support surface of the spindle head on said carriage and guiding the spindle head in its horizontal movement.

2. Carriage according to claim 1, characterized in that each of said metal bars forming the frames is provided at one end thereof with a stepped portion for cooperating with the stepless end of the adjacent metal bar.

3. Carriage according to claim 1 or 2, characterized in that said metal bars forming the frames are connected to each other by means of adjusting screws permitting an accurate fit of the metal bars to the outer surface of the spindle head.

4. Carriage according to claim 1, characterized in that said metal frames have a shape mating the shape of the spindle head.

## Patentansprüche

1. Schlitten für den Spindelkopf einer Werkzeugmaschine, der derart gebildet ist, daß er den Spindelkopf umschließt, um denselben abzustützen und zu führen, dadurch gekennzeichnet, daß
   - der Schlitten aus zwei Rechteckrahmen, die an die Enden des vertikal bewegbaren Spindelkopfschlittens befestigt sind, besteht;
   - jeder Rechteckrahmen aus vier einstellbar miteinander verbundenen Metallstangen gebildet ist;
   - die als Gleitfläche des Spindelkopfes wirkenden Rahmen die Tragfläche des Spindelkopfes am Schlitten vergrößern und den Spindelkopf in seiner horizontalen Bewegung führen.

2. Schlitten nach Anspruch 1, dadurch gekennzeichnet, daß jede der die Rahmen bildenden Metallstangen an einem Ende eine Stufe aufweist, die mit dem anderen stufenlosen Ende der benachbarten Metallstange zusammenwirkt.

3. Schlitten nach Anspruch 1 oder 2, dadurch gekennzeichnet, daß die die Rahmen bildenden Metallstangen mittels Einstellschrauben miteinander verbunden sind, die eine genaue Anpassung der Metallstangen an die Außenfläche des Spindelkopfes ermöglicht.

4. Schlitten nach Anspruch 1, dadurch gekennzeichnet, daß die Form der Metallrahmen der Spindelkopfform angepaßt ist.

## Revendications

1. Chariot pour le plateau de broche d'une machine-outil qui est formé de façon entourer le plateau de broche pour le supporter et guider dans ses mouvements, caractérisé en ce qu'il comporte:
   - deux cadres de forme carrée qui sont fixés aux extrémités du chariot mobile verticalement du plateau de broche;
   - chaque cadre de forme carrée comportant quatre barres en métal qui sont reliées entre eux de manière réglabe;
   - lesdits cadres qui agissent en qualité d'une surface de glissement du plateau de broche en augmentant la surface de support du plateau de broche sur ledit chariot et en guidant le plateau de broche dans son mouvement horizontal.

2. Chariot selon la revendication 1, caractérisé en ce que chacune desdites barres en métal formant les cadres comporte à une extrémité une marche destinée à coopérer avec l'extrémité sans la marche de la barre en métal adjacente.

3. Chariot selon la revendication 1 ou 2, caractérisé en ce que lesdites barres en métal formant les cadres sont reliées entre eux par des vis réglables, qui permettent un couplage exact de barres en métal avec la surface extérieure du plateau de broche.

4. Chariot selon la revendication 1, caractérisé en ce que lesdits cadres en métal ont une configuration complémentaire au plateau de broche.

*FIG.1*

*FIG.2*